Europäisches Patentamt

European Patent Office

Office européen des brevets

(11) Veröffentlichungsnummer : **0 030 395**
**B1**

# (12) EUROPÄISCHE PATENTSCHRIFT

(45) Veröffentlichungstag der Patentschrift :
30.03.83

(21) Anmeldenummer : **80200976.1**

(22) Anmeldetag : **15.10.80**

(51) Int. Cl.³ : **H 04 Q   5/02, H 04 M 13/00**

(54) **Notrufanlage.**

(30) Priorität : **08.12.79 DE 2949513**

(43) Veröffentlichungstag der Anmeldung :
**17.06.81 Patentblatt 81/24**

(45) Bekanntmachung des Hinweises auf die Patenterteilung : **30.03.83 Patentblatt 83/13**

(84) Benannte Vertragsstaaten :
**AT CH LI SE**

(56) Entgegenhaltungen :
**DE A 2 758 689**
**DE C 2 534 228**
**FR A 2 169 471**
**US A 3 961 144**
**US A 4 169 216**

(73) Patentinhaber : **Neumann Elektronik GmbH**
**Bülowstrasse 104 - 110**
**D-4330 Mülheim 1 (DE)**

(72) Erfinder : **Neumann, Dirk, Dipl.-Ing.**
**Schemelsbruch 11 ,**
**D-4330 Mülheim 1 (DE)**

(74) Vertreter : **Feder, Heinz, Dr. et ai**
**Dominikanerstrasse 37**
**D-4000 Düsseldorf 11 (DE)**

Notrufanlage

Gegenstand der Erfindung ist eine Notrufanlage mit mindestens einer Notrufsäule und einer Abfragestelle, die mittels einer Zweidrahtleitung miteinander verbunden sind, über welche sowohl die Signalübermittlung als auch die Gleichspannungsversorgung jeder Notrufsäule von der Abfragestelle aus erfolgt, und bei der jede Notrufsäule eine Fernsprecheinrichtung sowie eine Schalteinrichtung zum Aufbau und zum Auflösen der Verbindung mit der Abfragestelle aufweist.

Es ist eine Notrufanlage bekannt (siehe DE-OS 27 58 689) bei der zwei oder mehrere Notrufsäulen über eine gemeinsame Leitung mit einer Abfragestelle verbunden sind, und bei der während einer Gesprächsverbindung einer der Notrufsäulen alle anderen Notrufsäulen eine Besetztanzeige erhalten und gegen Mithören gesperrt sind. Bei dieser bekannten Notrufanlage erfolgt die Einschaltung einer Notrufsäule auf ein von dieser Notrufsäule ausgesendetes Rufzeichen hin von der Abfragestelle her durch Umpolen der Leitung. Dies macht eine Reihe von speziellen Vorrichtungen innerhalb der Notrufsäule erforderlich, so daß der Gesamtaufwand der Notrufanlage relativ groß wird.

Es ist zur Vermeidung eines größeren Aufwandes bei der Energieversorgung der Notrufsäulen einer Notrufanlage erwünscht, daß die Gleichspannungsversorgung jeder Notrufsäule von der Abfragestelle aus über die Signalleitung erfolgt. Gleichzeitig soll aber im abgeschalteten Zustand der Säulen möglichst kein Ruhestrom fließen. In der DE-PS 25 34 228 ist beispielsweise eine Wählvorrichtung für eine Notrufeinrichtung mit mindestens einer Ruftaste beschrieben, bei der die Stromversorgung der in der Notrufsäule angeordneten Wählvorrichtung sowie der Fernsprecheinrichtung durch den über die Signalleitung zugeführten Gleichstrom erfolgt. Die Einschaltung der Wählvorrichtung und der Fernsprecheinrichtung erfolgt bei dieser Anlage durch Tastendruck an der Notrufsäule. Die Abschaltung kann durch einen Zeitschalter erfolgen. Im abgeschalteten Zustand der Einrichtung fließt praktisch kein Ruhestrom. Der Aufbau dieser Einrichtung ist aber insgesamt, zumal es sich um eine mit Wählimpulsgruppen arbeitende Anlage handelt, relativ kompliziert.

Die der Erfindung zugrunde liegende Aufgabe bestand darin, eine Notrufanlage der eingangs erwähnten Bauart zu schaffen, mit der folgende Bedingungen erfüllbar sind :

a) Der Schaltungsaufwand soll möglichst gering sein ;

b) die Einschaltung soll jeweils von der Notrufsäule erfolgen, wobei der Verbindungsaufbau durch kurzen Tastendruck erfolgen soll ;

c) die Abschaltung soll von der Abfragestelle aus erfolgen, ohne daß eine Leitungsumpolung erforderlich ist ;

d) bei Einschaltung einer Notrufsäule sollen die jeweils anderen Notrufsäulen gesperrt sein ;

e) es sollen keine zusätzlichen Leitungen und keine zusätzliche Energieversorgung der einzelnen Notrufsäulen, etwa durch Anordnung von Batterien, erforderlich sein ;

f) im abgeschalteten Zustand der Anlage soll kein Ruhestrom fließen ;

g) es soll ohne großen Aufwand möglich sein, mehrere Notrufsäulen über eine Ringleitung (Party-line) mit einer Abfragestelle zu verbinden.

Die Lösung dieser Aufgabe erfolgt erfindungsgemäß dadurch, daß die Schalteinrichtung ein bistabiles Relais mit zwei Relaiswicklungen aufweist, über dessen Relaiskontakt der erste Zweig der Leitung im nichtaktivierten Zustand der Notrufsäule über einen Widerstand mit einer Elektrode eines ersten Kondensators und im aktivierten Zustand der Notrufsäule mit der Fernsprecheinrichtung verbunden ist, und die andere Elektrode des Kondensators mit dem zweiten Zweig der Leitung verbunden ist, wobei zur Aktivierung der Notrufsäule die beiden Elektroden des ersten Kondensators über einen durch einen Taster kurzzeitig betätigbaren kontakt sowie die erste Relaiswicklung des bistabilen Relais miteinander verbindbar sind und daß ein zweiter Kondensator vorhanden ist, dessen eine Elektrode mit dem ersten Zweig der Leitung zwischen dem Relaiskontakt des bistabilen Relais und der Fernsprecheinrichtung verbunden ist, während seine andere Elektrode mit dem zweiten Zweig der Leitung verbunden ist und dessen beide Elektroden über ein steuerbares Schaltglied sowie die zweite Relaiswicklung des bistabilen Relais miteinander verbindbar sind, wobei das steuerbare Schaltglied so angeordnet und ausgelegt ist, daß es schließt, wenn die über die Leitung zugeführte Speisespannung den Wert Null annimmt.

Wie weiter unten anhand eines Ausführungsbeispieles noch genauer erläutert, erfolgt der Aufbau und die Auslösung einer Verbindung durch ein bistabiles Relais. Der erste Kondensator dient als Ladungsspeicher, der sich durch einen kurzen Druck auf den Taster über die erste Wicklung des bistabilen Relais entlädt und dadurch die Einschaltung bewirkt. Zur Auslösung der Verbindung nach Beendigung des Gespräches wird die Leitung kurzzeitig unterbrochen bzw. die Leitungsspannung kurzzeitig abgeschaltet, dies hat zur Folge, daß das Schaltglied angesteuert wird und sich der ebenfalls als Ladungsspeicher dienende zweite Kondensator über die zweite Wicklung des bistabilen Relais entlädt und dadurch den Relaiskontakt rücksetzt, wodurch die Abschaltung bewirkt wird.

Die Anlage läßt sich mit außerordentlich geringem Aufwand aufbauen und, da keinerlei ständig geschlossene Parallelzweige zwischen den beiden Zweigen der Leitung notwendig sind, fließt kein Ruhestrom über die Leitung.

Verschiedene vorteilhafte Ausführungsformen der erfindungsgemäßen Anlage sind möglich.

So kann als steuerbares Schaltglied entweder ein Stromrelais oder ein Schalttransistor verwendet werden. Als zweiter Kondensator kann ein Kondensator verwendet werden, der in jeder derartigen Anlage sowieso parallel zu den Eingängen der Fernsprecheinrichtung geschaltet ist.

Wenn mehrere Notrufsäulen über eine Ringleitung mit der Abfragestelle verbunden werden, fällt jedesmal, wenn eine Notrufsäule eingechaltet wird, die Spannung auf der Leitung ab.

Dies kann zur Sperrung der übrigen Notrufsäulen ausgenutzt werden, was beispielsweise dadurch geschehen kann, daß in dem Stromkreis der ersten Relaiswicklung des bistabilen Relais eine Z-Diode eingeschaltet ist, die ein Ansprechen des Relais unterhalb einer vorgegebenen Spannung unmöglich macht. In einem solchen Fall ist es zweckmäßig, wenn bei Betätigung einer derart gesperrten Notrufsäule dem Benutzer ein Besetztsignal die Sperrung anzeigt. Auch dies ist bei der erfindungsgemäßen Notrufsäule in besonders einfacher Weise möglich, indem eine Besetztmeldeeinrichtung durch einen weiteren Kontakt des ohnehin vorhandenen Tasters in Tätigkeit gesetzt wird. Diese Einrichtungen können ohne besonderen Aufwand grundsätzlich in der Notrufsäule vorgesehen sein, so daß die Notrufsäulen wahlweise in Einzel- bzw. Parallelanschluß verwendbar sind.

Im folgenden werden anhand der beigefügten Zeichnungen Ausführungsbeispiele für die Notrufanlage nach der Erfindung näher erläutert :

Es zeigen :

Figur 1 eine Schaltungsanordnung für ein erstes Ausführungsbeispiel einer Notrufsäule bei einer Anlage nach der Erfindung ;

Figur 2 eine Schaltungsanordnung für ein zweites Ausführungsbeispiel einer Notrufsäule bei einer Anlage nach der Erfindung ;

Figur 3 eine Schaltungsanordnung für ein drittes Ausführungsbeispiel einer Notrufsäule bei einer Anlage nach der Erfindung ;

Figur 4 die Schaltungsanordnung für eine Gesamtanlage bei der mehrere Notrufsäulen über eine Ringleitung mit einer Abfragestelle verbunden sind.

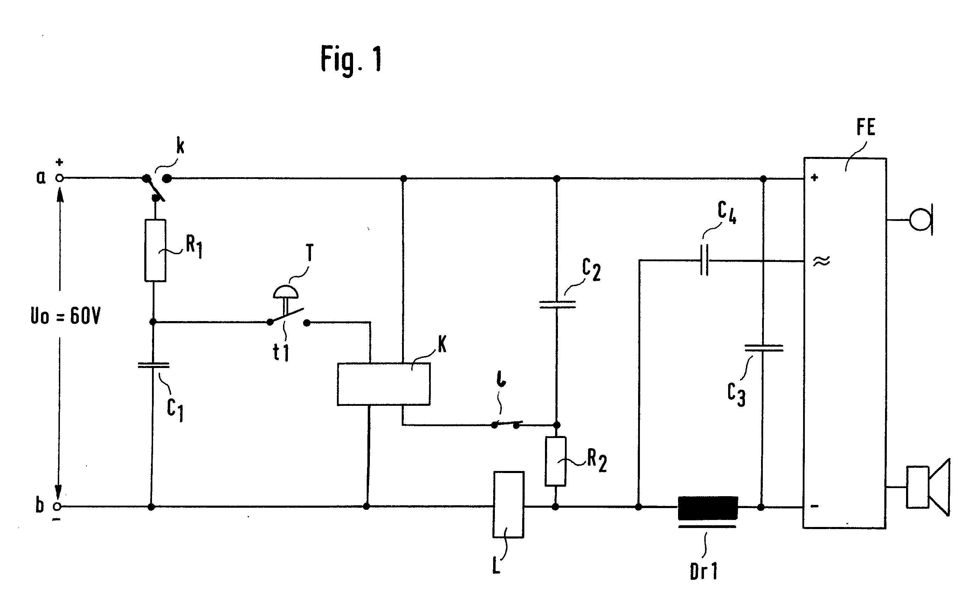

Bei der in Fig. 1 dargestellten Ausführungsform ist der in bekannter Weise aufgebauten Fernsprecheinrichtung einer Notrufsäule eine Schalteinrichtung vorgeschaltet, mit deren Hilfe ein Verbindungsaufbau und eine Verbindungsauslösung zwischen der Fernsprecheinrichtung FE über die Signalleitung a, b mit einer nicht dargestellten Abfragestelle möglich ist. Die Schaltungseinrichtung besitzt ein bestabiles Relais K durch dessen Relaiskontakt k der erste, beispielsweise positive Zweig a der Signalleitung entweder mit der Fernsprecheinrichtung FE oder über einen Widerstand R1 mit der einen Elektrode eines Kondensators C1 verbunden werden kann. Die andere Elektrode des Kondensators C1 ist mit dem zweiten, beispielsweise negativen Zweig b der Signalleitung verbunden. Die beiden Elektroden des Kondensators C1 sind über einen Kontakt t1 und die eine Wicklung des bistabilen Relais K miteinander verbindbar. Der Kontakt t1 kann über einen Taster T kurzzeitig betätigt werden.

Die eine Elektrode eines zweiten Kondensators C2 ist mit dem Zweig a der Signalleitung zwischen dem Relaiskontakt k und der Fernsprecheinrichtung FE verbunden, während die andere Elektrode dieses Kondensators über einen Widerstand R2 mit dem zweiten Zweig b der Signalleitung verbunden ist. Die beiden Elektroden des Kondensators C2 sind über einen Relaiskontakt I und die zweite Wicklung des bistabilen Relais K miteinander verbindbar. Der Relaiskontakt I wird betätigt durch ein Stromrelais L, das in den Zweig b der Signalleitung eingeschaltet ist.

Die Drossel Dr1 sowie die Kondensatoren C3 und C4 dienen in bekannter Weise zur Trennung der Gleichstrom- und Wechselstromanteile des über die Signalleitung a, b ankommenden Signals.

Die Funktionsweise der in Fig. 1 dargestellten Vorrichtung ist folgende :

Im Ruhezustand der Notrufsäule befindet sich der Relaiskontakt k des bestabilen Relais K in der in der Fig. 1 eingezeichneten Stellung. Die Leitungsspannung von beispielsweise $U_o = 60$ V liegt über dem Widerstand R1 am Kondensator C1, der aufgeladen ist. Soll die Notrufsäule in Betrieb genommen werden, wird der Taster T kurz gedrückt. Während des Drückens entlädt sich der Kondensator C1 über die erste Wicklung des bistabilen Relais K, wodurch der Relaiskontakt k umgesetzt wird und die Fernsprecheinrichtung direkt an die Signalleitung a, b angeschlossen wird. Zur Wiederauflösung der verbindung wird die Spannung auf der Signalleitung a, b kurzzeitig unterbrochen. Dies hat zur Folge, daß durch das Stromrelais L kein Strom mehr fließt, und der, als Ruhekontakt ausgebildete Relaiskontakt I schließt. Nun kann sich der Kondensator C2 über die zweite Relaiswicklung des bestabilen Relais K entladen, wodurch der Relaiskontakt k wieder in die Anfangsstellung zurückgesetzt wird, in der die Fernsprecheinrichtung FE von der Signalleitung a, b abgetrennt ist und der Kondensator C1 nach dem Wiedereinschalten der Leitungsspannung wieder aufgeladen wird.

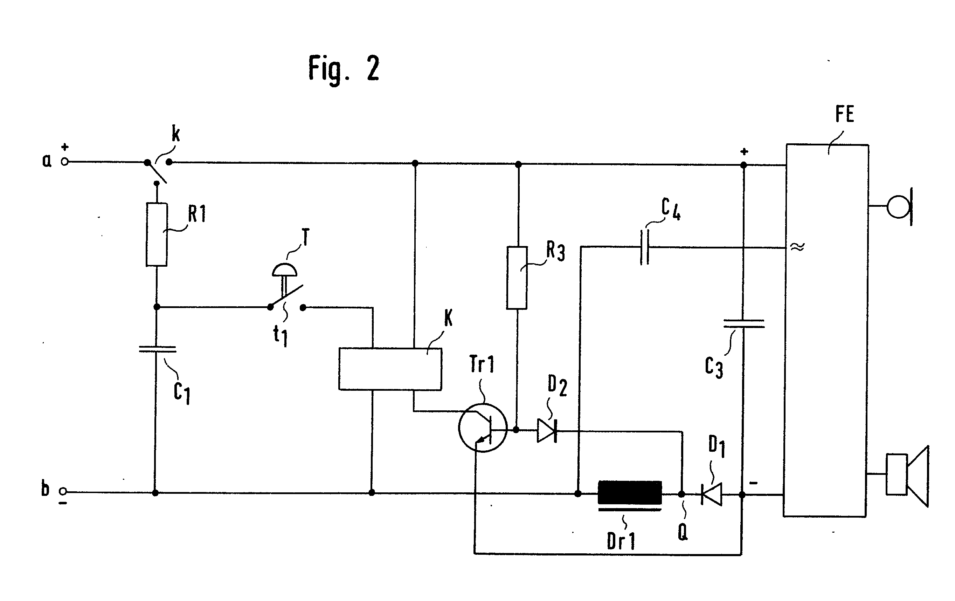

Bei der in Fig. 2 dargestellten Ausführungsform ist anstelle des Stromrelais L mit Ruhekontakt I zum Bewirken der Ausschaltung ein Schalttransistor Tr1 getreten.

Die zum Einschalten der Notrufsäule erforderlichen Schaltelemente, sind die gleichen wie bei der Ausführungsform nach Fig. 1 und sind auch mit den gleichen Bezugzeichen versehen.

Als Ladungsspeicher für die Ausschaltung der Notrufsäule dient bei dieser Ausführungsform der ohnehin vorhandene Kondensator C3. Dieser Kondensator C3 ist unmittelbar zwischen die beiden Zweige a, b der Signalleitung parallel zu den Gleichspannungseingängen der Fernsprecheinrichtung FE geschaltet. Die beiden Elektroden des Kondensators C3 sind über einen Stromkreis miteinander verbunden, der über den Schalttransistor Tr1 und die zweite Wicklung des bestabilen Relais K läuft. Die Basis des Schalttransistors Tr1 ist über den Widerstand R3 mit dem ersten Zweig a der Signalleitung und über eine Diode D2 mit einem Punkt Q des zweiten Zweiges b der Signalleitung verbunden. Zwischen dem Punkt Q und dem Verbindungspunkt des Kondensators C3 mit dem zweiten Zweig b der Signalleitung ist noch eine Diode D1 eingeschaltet.

Bei der in Fig. 2 dargestellten Vorrichtung erfolgt die Abschaltung der Notrufsäule nach Gesprächsbeendigung in folgender Weise :

Der Kondensator C3 ist während des Gespräches über die Drossel Dr1 und die Diode D1 auf eine Spannung aufgeladen, die kleiner ist als die Leitungsspannung im Ruhestand. Dadurch erhält die Basis des Transistors Tr1 über die Diode D2 eine negative Sperrspannung. Der Transistor Tr1 ist gesperrt.

Nach Gesprächsbeendigung wird die Spannung an der Signalleitung a, b kurzzeitig weggenommen. Dadurch fällt die Sperrspannung an der Basis des Transistors Tr1 weg und der Transistor schaltet durch. Nun kann sich der Kondensator C3 über den Transistor Tr1 und die zweite Relaiswicklung des bistabilen Relais K entladen, was über den Relaiskontakt k zur Ausschaltung der Notrufsäule führt. Durch die Diode D2 wird erreicht, daß beim Wegnehmen der Leitungsspannung der Transistor Tr1 sicher durchschaltet, auch wenn noch eine geringe Restspannung auf der Leitung vorhanden ist. Durch die Diode D1 wird verhindert, daß sich der Kondensator C3 anders als über den Transistor Tr1 entladen kann.

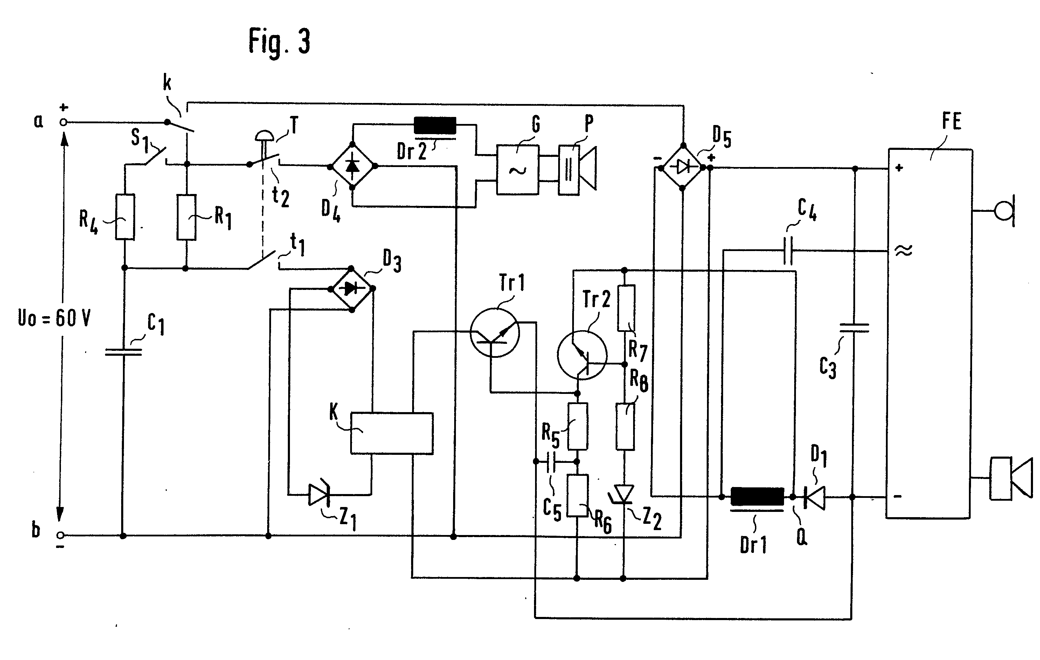

Die in Fig. 3 dargestellte Ausführungsform einer Notrufsäule stellt eine Weiterbildung der Ausführungsform nach Fig. 2 dar.

Über den Relaiskontakt k des bistabilen Relais K wird der Zweig a der Signalleitung wahlweise entweder über eine Gleichspannungsbrücke D5 mit der Fernsprecheinrichtung FE oder über den Widerstand R1 mit der einen Elektrode des Kondensators C1 verbunden, dessen zweite Elektrode wiederum mit dem Zweig b der Signalleitung verbunden ist. Die beiden Elektroden des Kondensators C1 sind über den Kontakt t1 des Tasters T, eine Gleichspannungsbrücke D3, eine Z-Diode Z1 und die erste Relaiswicklung des bistabilen Relais K miteinander verbindbar.

Die Elektroden des Kondensators C3 sind über den Transistor Tr1 und die zweite Wicklung des bistabilen Relais K miteinander verbunden.

Die Basis des Transistors Tr1 ist mit dem Kollektor eines Hilfstransistors Tr2 verbunden, der in Serie mit den Widerständen R5 und R6 zwischen den positiven und negativen Zweig der Signalleitung a, b geschaltet ist. Die Basisspannung für den Hilfstransistor Tr2 wird an einem Spannungsteiler R7, R8 in den noch eine weitere Z-Diode Z2 eingeschaltet ist, abgenommen. Auch dieser Spannungsteiler liegt zwischen dem positiven und dem negativen Zweig der Signalleitung a, b.

Die Notrufsäule weist weiterhin eine Vorrichtung zur Abgabe einer Besetztmeldung auf. Diese Vorrichtung ist über einen zweiten Kontakt t2 des Tasters T sowie dem Kontakt k des bistabilen Relais K an den Zweig a der Signalleitung anschließbar. Sie weist eine Gleichspannungsbrücke D4 sowie eine Drossel Dr2 auf, über die die Speisespannung einem Signalgenerator G zugeführt wird, der ein Gerät zur Abgabe eines akustischen Signals betreibt, das beispielsweise als piezokeramischer Schwinger mit einer Frequenz von ca. 2,5 KHz ausgebildet sein kann. Selbstverständlich kann die Vorrichtung auch mit optischen Signalanzeigen ausgerüstet sein. Die Drossel Dr2 dient einerseits dazu, den im allgemeinen eine niedrige Eingangsimpedanz aufweisenden Generator G wechselstrommäßig von der Signalleitung a, b abzutrennen, andererseits kann sie so bemessen sein, daß die von G abgegebene Besetztmeldung in der Abfragestelle mitgehört werden kann, und auf diese Weise dort erkannt werden kann, daß ein weiterer Teilnehmer eine Verbindung mit der Abfragestelle wünscht.

Die in der Schalteinrichtung angeordneten Gleichstrombrücken D3, D4, D5 dienen dazu etwa zufällig erfolgende Umpolungen der Leitung in ihrer Wirkung aufzuheben.

Die Wirkungsweise der in Fig. 3 dargestellten Schaltungsanordnung ist folgende :

Im Ruhezustand der Säule befindet sich der Relaiskontakt k in der in Fig. 3 eingezeichneten Stellung. Auf der Signalleitung a, b herrscht, wenn kein anderer Verbraucher eingeschaltet ist, eine vorgegebene Nennspannung von beispielsweise 60 V. Durch Druck auf den Taster T wird der Kontakt t1 kurzzeitig geschlossen, der Kondensator C1 entlädt sich über die erste Wicklung des bistabilen Relais K, und der Relaiskontakt k wird umgesetzt. Ist an die Leitung bereits ein anderer Verbraucher angeschlossen d. h. eine andere Notrufsäule in Tätigkeit, so liegt die auf der Leitung herrschende Spannung wesentlich niedriger. Der Kondensator C1 ist daher auch auf eine weit niedrigere Spannung aufgeladen. Dies hat zur Folge, daß infolge der durch die Z-Diode Z1 gegebene Spannungsschwelle beim Schließen des Kontaktes t1 eine Entladung des Kondensators C1 über die erste Wicklung des bistabilen Relais K nicht möglich ist. Die Notrufsäule kann dann also nicht eingeschaltet werden. Gleichzeitig wird durch das Schließen des Kontaktes T2 die Vorrichtung zur Abgabe der Besetztmeldung an den Zweig a der Signalleitung angeschlossen, und es wird eine Besetztmeldung abgegeben.

Soll die eingeschaltete Notrufsäule nach Beendigung des Gespräches abgeschaltet werden, so wird, wie bereits erläutert, die Spannung auf der Signalleitung a, b, kurzzeitig unterbrochen. Dies hat zur Folge, daß am Punkt Q die bisher dort herrschende negative Spannung wegfällt.

Der bisher leitend gesteuerte Hilfstransistor Tr2 sperrt und der Transistor Tr1 wird leitend gesteuert. Der Kondensator C3 kann sich somit über den Transistor Tr1 entladen. Auch bei dieser Schaltung dient die Diode D1 dazu, eine Entladung des Kondensators C3 auf einem anderen Wege als über den Transistor Tr1 zu verhindern. Der dem Emitter des Transistors Tr1 mit einem Punkt des Spannungsteilers R5-R6 verbindende Kondensator C5 dient dazu, die Verbindung aufrechtzuerhalten, wenn es zu zufälligen, kurzzeitigen Spannungsunterbrechungen an der Signalleitung a, b kommt, durch welche die Anlage nicht abgeschaltet werden soll.

Soll eine Notrufsäule gemäß Fig. 3 in Einzelanschaltungen mit einer Abfragestelle verbunden werden, so wird der zusätzlich vorgesehene Schalter S1 geschlossen und somit der Widerstand R4 parallel zum Widerstand R3 geschaltet. Der Widerstand R4 hat einen erheblich niedrigeren Widerstandswert (ca. 600 Ω) als der Widerstand R1 (ca. 50 bis 100 KΩ).

Sollen mehrere Notrufsäulen nach Fig. 3 über eine Ringleitung einander parallel geschaltet werden und mit der Abfragestelle verbunden werden, so wird der Schalter S1 geöffnet.

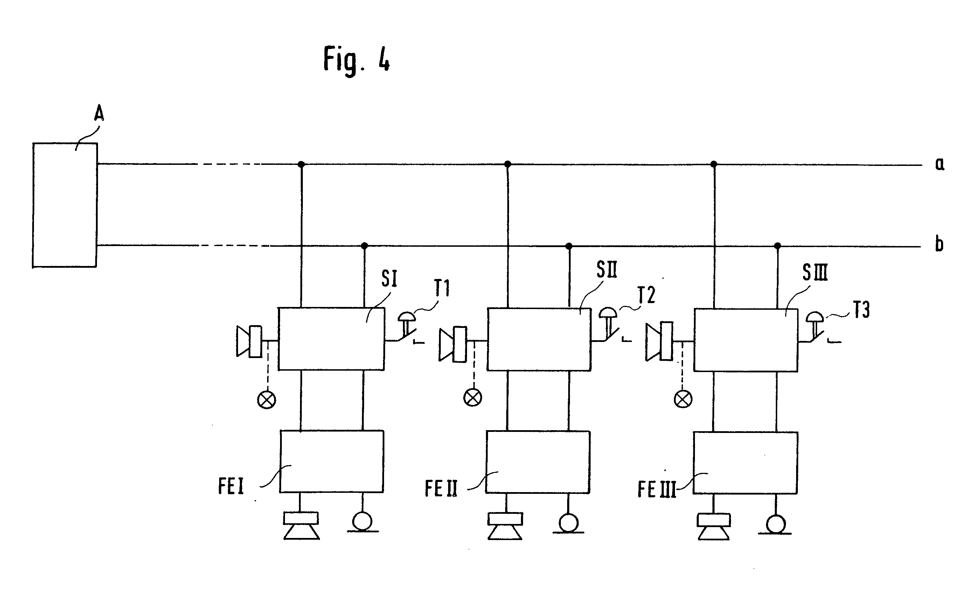

In Fig. 4 ist die Verbindung mehrerer, einander parallel geschalteter Notrufsäulen, die beispielsweise gemäß der Ausführungsform nach Fig. 3 ausgebildet sein können, mit einer Abfragestelle A dargestellt.

Die Notrufsäulen besitzen jeweils Fernsprecheinrichtungen FE I, FE II und FE III und Schalteinrichtungen S I, S II und S III, an denen sich jeweils ein Taster T1, T2 und T3 befindet. Durch Drücken der Taster T1, T2 oder T3 wird die Verbindung hergestellt. Ist bereits eine Verbindung hergestellt, so bewirkt das Drücken eines der Taster T1, T2 oder T3 das Ertönen eines akustischen und/oder optischen Besetztsignales.

**Ansprüche**

1. Notrufanlage mit mindestens einer Notrufsäule und einer Abfragestelle, die mittels einer Zweidrahtleitung miteinander verbunden sind, über welche sowohl die Signalübermittlung als auch die Gleichspannungsversorgung jeder Notrufsäule von der Abfragestelle aus erfolgt und bei der jede Notrufsäule eine Fernsprecheinrichtung sowie eine Schalteinrichtung zum Aufbau und zum Auflösen der Verbindung mit der Abfragestelle aufweist, dadurch gekennzeichnet, daß die Schalteinrichtung ein bistabiles Relais (K) mit zwei Relaiswicklungen aufweist, über dessen Relaiskontakt (k) der erste Zweig (a) der Leitung im nichtaktivierten Zustand der Notrufsäule über einen Widerstand (R1) mit einer Elektrode eines ersten Kondensators (C1) und im aktivierten Zustand der Notrufsäule mit der Fernsprecheinrichtung (FE) verbunden ist, und die andere Elektrode des Kondensators (C1) mit dem zweiten Zweig (b) der Leitung verbunden ist, wobei zur Aktivierung der Notrufsäule die beiden Elektroden des ersten Kondensators (C1) über einen durch einen Taster (T) kurzzeitig betätigbaren Kontakt (t1) sowie die erste Relaiswicklung des bistabilen Relais (K) miteinander verbindbar sind und daß ein zweiter Kondensator (C2), (C3) vorhanden ist, dessen eine Elektrode mit dem ersten Zweig (a) der Leitung zwischen dem Relaiskontakt (k) des bistabilen Relais (K) und der Fernsprecheinrichtung (FE) verbunden ist, während seine andere Elektrode mit dem zweiten Zweig (b) der Leitung verbunden ist und dessen beide Elektroden über ein steuerbares Schaltglied (I, Tr1) sowie die zweite Relaiswicklung des bistabilen Relais (K) miteinander verbindbar sind, wobei das steuerbare Schaltglied (I, Tr1) so angeordnet und ausgelegt ist, daß es schließt, wenn die über die Leitung (a, b) zugeführte Speisespannung den Wert Null annimmt.

2. Notrufanlage nach Anspruch 1, dadurch gekennzeichnet, daß das steuerbare Schaltglied ein Stromrelais (L) ist, dessen Wicklung in einen Zweig (b) der Leitung (a, b) eingeschaltet ist und sein Relaiskontakt (I) als Ruhekontakt die beiden Elektroden des zweiten Kondensators (C2) über die zweite Wicklung des bistabilen Relais (k) verbindet.

3. Notrufanlage nach Anspruch 1, dadurch gekennzeichnet, daß das steuerbare Schaltglied ein Schalttransistor (Tr1) ist, dessen Basisspannung von einem Punkt (Q) der Leitung (a, b) her so gesteuert wird, daß der Schalttransistor (Tr1) sperrt, jedoch durchschaltet, wenn die über die Leitung (a, b) zugeführte Speisespannung den Wert Null annimmt.

4. Notrufanlage nach Anspruch 3, dadurch gekennzeichnet, daß als zweiter Kondensator ein unmittelbar zwischen die beiden Zweige (a, b) der Leitung parallel zur Fernsprecheinrichtung (FE) geschalteter Kondensator (C3) dient, und zwischen den Verbindungspunkt der einen Elektrode dieses Kondensators (C3) mit dem betreffenden Zweig (b) und dem Punkt (Q) der Leitung, von dem aus die Basisspannung des Schalttransistors (Tr1) gesteuert wird, eine Diode (D1) eingeschaltet ist, die ein Abfließen der Ladung des zweiten Kondensators (C3) über diesen Zweig verhindert.

5. Notrufanlage nach Anspruch 3 oder 4, dadurch gekennzeichnet, daß dem Schalttransistor (Tr1) eine Steuerstufe vorgeschaltet ist, die einen Hilfstransistor (Tr2) enthält, dessen Basisspannung von einem zwischen die beiden Zweige (a, b) der Leitung geschalteten Spannungsteiler (R7, R8) abgenommen wird.

6. Notrufanlage nach einem der Ansprüche 1 bis 5, dadurch gekennzeichnet, daß der ersten Relaiswicklung des bistabilen Relais (K) eine Z-Diode (Z1) vorgeschaltet ist.

7. Notrufanlage nach einem der Ansprüche 1 bis 6, dadurch gekennzeichnet, daß zwischen die Leitung (a, b) und die Schalteinrichtung sowie die Fernsprecheinrichtung (FE) die Wirkung einer Leitungsumpolung aufhebende Gleichrichterbrücken (D3, D5) eingeschaltet sind.

8. Notrufanlage nach einem der Ansprüche 1 bis 7, dadurch gekennzeichnet, daß die Schalteinrichtung eine Vorrichtung zur Abgabe einer Besetztmeldung aufweist, die über einen zweiten Kontakt (t2) des Tasters (T) während dessen Betätigung und den Relaiskontakt (k) des bistabilen Relais (k) gemeinsam mit dem ersten Kondensator (C1) mit dem ersten Zweig (a) der Leitung verbunden ist, wobei ein akustisches und/oder optisches Besetztsignal abgegeben wird.

9. Notrufanlage nach einem der Ansprüche 1 bis 8, dadurch gekennzeichnet, daß dem Widerstand (R1) zwischen dem Relaiskontakt (k) des bistabilen Relais (K) und dem ersten Kondensator (C1) über einen Schalter (S1) ein zweiter Widerstand (R4) parallel geschaltet ist, dessen Widerstandswert wesentlich niedriger ist als der Widerstandswert des ersten Widerstandes (R1).

**Claims**

1. Emergency call installation comprising at least one emergency call column and an inquiry-station connected there-with through a two-branch line serving for the signal transmission as well as for the supply of the D.C.-voltage to each of the emergency call columns from the inquiry-station, each of the emergency call columns including a telephone station as well as a switching arrangement for establishing and interrupting the connexion with the inquiry-station, characterized in that the switching arrangement comprises a doublewound bistable relay (K) through the contact (k) of which, in the non-activated state of the emergency call column, the first branch (a) of the line is connected, through a first resistor (R1) with one electrode of a first capacitor (C1) and, in the activated state of the emergency call column, is connected with the telephone station (FE), the other electrode of the capacitor (C1) being connected with the second branch (b) of the line whereby, for activation of said emergency call column, the two electrodes of the first capacitor (C1) are adapted to be connected together through a contact (t1) which can be momentarily actuated by a key button (T), as well as through the first coil of the bistable relay (K), and that a second capacitor (C2, C3) is provided one electrode of which is connected, between the contact (k) of the bistable relay (K) and the telephone station (FE), with the first branch (a) of the line, where-as its other electrode is connected with the second branch (b) of the line, and both electrodes of which are adapted to be connected together through a controllable switching element (I, Tr1) and the second coil of the bistable relay (K), whereby the controllable switching element (I, Tr1) ist arranged and designed so that it closes when the feeding voltage supplied through the line (a, b), attains the zero value.

2. Emergency call installation as claimed in claim 1, characterized in that the controllable switching element is a current relais (L) the coil of which is connected in one branch (b) of the line (a, b), and the relay contact (I) of which, as a normally closed contact, connects together the two electrodes of the second capacitor (C2) through the second coil of the bistable relay (K).

3. Emergency call installation as claimed in claim 1, characterized in that the controllable switching element is a switching transistor (Tr1) the basis voltage of which is controlled from a point (Q) of the line (a, b) in such a way that the switching transistor (Tr1) occupies its locking position but connects through when the feeding voltage supplied through the line (a, b) attains the zero value.

4. Emergency call installation as claimed in claim 3, characterized in that a capacitor (C3) which is directly connected between the branches (a, b) of the line parallel to the telephone station (FE), serves as a second capacitor, and that a diode (D1) is connected between the point of connexion of one electrode of this capacitor (C3) with the corresponding branch (b) of the line and the point (Q) from which the basis voltage of the switching transistor (Tr1), is controlled, said diode (D1) preventing a flow-off of the charge of the second capacitor (C3) through this branch.

5. Emergency call installation as claimed in claim 3 or 4, characterized in that the switching transistor (Tr1) is preceded by a control stage including an auxiliary transistor (Tr2) the basis voltage of which is taken from a voltage divider (R7, R8) connected between the two branches (a, b) of the line.

6. Emergency call installation as claimed in one of claims 1 to 5, characterized in that a Z-diode (Z1) is connected in series with the first coil of the bistable relay (K).

7. Emergency call installation as claimed in one of claims 1 to 6, characterized in that rectifier bridges (D3, D5) are connected between the line (a, b) and the switching arrangement as well as the telephone station (FE), said rectifier bridges eliminating the effect of a polarity reversal of the capacity.

8. Emergency call installation as claimed in one of claims 1 to 7, characterized in that the switching arrangement includes a device for emitting a busy-line signal which device is connected with the first branch (a) of the line through a second contact (t2) of the key button (T) during actuation there-of and, together with the first capacitor (C1), through the contact (k) of the bistable relay (K), whereby an acoustical and/or optical busy-line signal is emitted.

9. Emergency call installation as claimed in one of claims 1 to 8, characterized in that, between the contact (k) of the bistable relay (K) and the first capacitor (C1), a second resistor (R4) is connected parallel to the first resistor (R1) through a switch (S1), the resistance value of said second resistor (R4) being substantially lower than that of said first resistor (R1).

**Revendications**

1. Installation d'appel d'urgence comprenant au moins une borne téléphonique d'urgence et un poste répondeur reliés par une ligne à deux fils, par laquelle s'effectue à la fois la transmission des signaux et l'alimentation en courant continu de chaque borne à partir du poste répondeur, chaque borne possédant un poste téléphonique et un dispositif de commutation pour établir et couper la communication avec le poste répondeur, caractérisée en ce que le dispositif de commutation comporte un relais bistable (K) à deux enroulements et un contact (k), par lequel le premier conducteur (a) de la ligne est relié à travers une résistance (R1) à une électrode d'un premier condensateur (C1) lorsque la borne n'est pas activée et par lequel il est relié au poste téléphonique (FE) lorsque la borne est activée en vue d'un appel, l'autre électrode du condensateur (C1) étant reliée au second conducteur (b) de la ligne, la borne étant activée par la connexion des deux électrodes du premier condensateur (C1) l'une à l'autre par la brève fermeture du contact (t1) d'un bouton-poussoir (T) et à travers un premier enroulement du relais bistable (K), et en ce qu'un second condensateur (C2, C3) est relié par une électrode au premier conducteur (a) de la ligne entre le contact (k) du relais bistable (K) et le poste téléphonique (FE), tandis que son autre électrode est reliée au second conducteur (b) de la ligne, les deux électrodes de ce second condensateur pouvant être connectées l'une à l'autre par un organe de commutation (l, Tr1) commandé et à travers le second enroulement du relais bistable (K), l'organe de commutation (l, Tr1) étant conçu et branché de manière qu'il se ferme lorsque la tension d'alimentation appliquée par la ligne (a, b) tombe à zéro.

2. Installation selon la revendication 1, caractérisée en ce que l'organe de commutation commandé est un relais d'intensité (L), dont l'enroulement est branché dans un conducteur (b) de la ligne (a, b) et qui possède un contact de repos (l) pour relier l'une à l'autre les deux électrodes du second condensateur (C2) à travers le second enroulement du relais bistable (K).

3. Installation selon la revendication 1, caractérisée en ce que l'organe de commutation commandé est un transistor de commutation (Tr1), dont la tension de base est commandée de telle manière, à partir d'un point (Q) de la ligne (a, b), que le transistor (Tr1) bloque normalement mais devient conducteur lorsque la tension d'alimentation appliquée par la ligne (a, b) tombe à zéro.

4. Installation selon la revendication 3, caractérisée en ce que le second condensateur est un condensateur (C3) branché directement entre les deux conducteurs (a, b) de la ligne, parallèlement au poste téléphonique (FE), et en ce qu'une diode (D1) est montée entre le point de branchement d'une électrode de ce condensateur (C3) sur le conducteur (b) et le point (Q) de la ligne à partir duquel est commandée la tension de base du transistor de commutation (Tr1), afin d'empêcher la décharge du second condensateur (C3) à travers ce conducteur.

5. Installation selon la revendication 3 ou 4, caractérisée en ce que le transistor de commutation (Tr1) est précédé d'un étage pilote contenant un transistor auxiliaire (Tr2), dont la tension de base est prélevée d'un diviseur de tension (R7, R8) branché entre les deux conducteurs (a, b) de la ligne.

6. Installation selon l'une quelconque des revendications 1 à 5, caractérisée en ce que le premier enroulement du relais bistable (K) est précédé d'une diode de Zéner (Z1).

7. Installation selon l'une quelconque des revendications 1 à 6, caractérisée en ce que des ponts redresseurs (D3, D5) qui suppriment l'effet d'une inversion de polarité de la ligne sont branchés entre la ligne (a, b) et le dispositif de commutation ainsi que le poste téléphonique (FE).

8. Installation selon l'une quelconque des revendications 1 à 7, caractérisée en ce que le dispositif de commutation comporte un dispositif pour délivrer une indication d'occupation, lequel est relié au premier conducteur (a) de la ligne par un second contact (t2) du bouton-poussoir (T), pendant la manœuvre de celui-ci, et, en commun avec le premier condensateur (C1), par le contact (k) du relais bistable (K), en vue de la délivrance d'un signal d'occupation acoustique et/ou optique.

9. Installation selon l'une quelconque des revendications 1 à 8, caractérisée en ce qu'une seconde résistance (R4) de valeur ohmique nettement plus faible est branchée parallèlement, par un interrupteur (S1), à la résistance (R1) entre le contact (k) du relais bistable (K) et le premier condensateur C1).

Fig. 1

$U_0 = 60V$

Fig. 2

0 030 395

Fig. 3

Fig. 4